# EUROPÄISCHE PATENTSCHRIFT

(11) **EP 1 056 627 B1**
(45) Veröffentlichungstag und Bekanntmachung des Hinweises auf die Patenterteilung: **16.11.2005**
(21) Anmeldenummer: 99955784.6
(22) Anmeldetag: 24.09.1999
(51) Int. Cl.: B60S 1/38, B29C 71/02, B29C 67/00

(54) **KUNSTSTOFFTEIL WIE EIN WISCHBLATT UND VERFAHREN ZU DESSEN HERSTELLUNG**
PLASTIC PART, SUCH AS A WIPER BLADE, AND METHOD FOR PRODUCING SAME
PIECE EN MATIERE PLASTIQUE, TELLE QU'UNE RACLETTE D'ESSUIE-GLACE, ET PROCEDE DE FABRICATION DE LADITE PIECE

(30) Priorität: 29.12.1998 DE 19860586
(43) Veröffentlichungstag der Anmeldung: 06.12.2000
(73) Patentinhaber: ROBERT BOSCH GMBH, 70442 Stuttgart (DE)
(72) Erfinder: DE PAOLI, Albano, D-75417 Muehlacker (DE); JUST, Bernhard, D-71394 Kernen (DE); MERKEL, Wilfried, D-77876 Kappelrodeck (DE); SCHMIDT, Thomas, B-3300 Tienen (BE); KOTLARSKI, Thomas, D-53474 Bad Neuenahr (DE); BALD, Rolf, D-74206 Bad Wimpfen (DE)
(86) Internationale Anmeldenummer: PCT/DE1999/003062
(87) Internationale Veröffentlichungsnummer: WO 2000/038963

(56) Entgegenhaltungen:
- DE-A- 3 936 597
- DE-A- 19 738 232
- FR-A- 2 587 649
- US-A- 3 971 173
- US-A- 5 122 213

## Beschreibung

### Stand der Technik

Die Erfindung geht aus von einem Kunststoffteil und einem Verfahren nach der Gattung der unabhängigen Ansprüche.

Bei Scheibenwischanlagen ragt im allgemeinen eine oder mehrere in einem Wischerlager gelagerte Antriebswellen aus einer Kraftfahrzeugkarosserie und bewegt einen an ihrem freien Ende befestigten Wischarm mit einem Wischblatt über eine Windschutzscheibe. Der Wischarm besitzt ein mit der Antriebswelle drehfest verbundenes Befestigungsteil, das gelenkig über ein Kniegelenk mit einem Gelenkteil verbunden ist, an das sich starr eine Wischstange anschließt. In die Wischstange ist an einem hakenförmigen Ende das Wischblatt eingehängt.

Das Wischblatt weist in der Regel ein mehrgliedriges Tragbügelsystem auf mit an einem Hauptbügel angelenkten Zwischenbügeln, mit deren Enden Krallenbügel gelenkig verbunden sind. Die Krallenbügel halten an ihren Enden mit ihren Krallen eine Wischleiste an deren Kopfleiste. Das Befestigungsteil und das Gelenkteil sind mit einer Zugfeder verspannt und drücken das Wischblatt in Richtung Windschutzscheibe. Das mehrgliedrige Tragbügelsystem und eine in der Kopfleiste der Wischleiste eingelegte Federschiene ermöglichen, daß sich die Wischleiste mit einer geeigneten Auflagekraft einer gebogenen Windschutzscheibe beim Wischen anpaßt, und zwar mit einer in Längsrichtung konstanten oder zu den Enden des Wischblatts abnehmenden Auflagekraft.

Um ein leichtes, flachbauendes, geräuscharmes und kostengünstiges Wischblatt zu erhalten, ist aus der DE 197 38 232.0 bekannt, anstatt einem Tragbügelsystem ein elastisch verformbares, eine Wischleiste haltendes Kunststofftragelement zu verwenden. Das Tragelement besitzt im unbelasteten Zustand eine vorgebogene Form. Wird das Tragelement durch den Wischarm auf die Windschutzscheibe gedrückt, weitet sich das Tragelement solange auf, bis es über die gesamte Länge mit einer geeigneten Auflagekraft auf der Windschutzscheibe zum Liegen kommt. Das Tragelement paßt sich dabei an die gekrümmte Windschutzscheibe an. Das Tragelement kann eine über die Länge konstante Auflagekraft oder eine zu den Enden abnehmende Auflagekraft aufweisen. Je nach Wischblattposition ändert sich der Krümmungsradius der Windschutzscheibe, an den sich das Wischblatt anpassen muß. Um sicher zu stellen, daß das Wischblatt in jeder Position über seine gesamte Länge auf der Windschutzscheibe mit einer geeigneten Auflagekraft zum Liegen kommt, ist die Krümmung des Tragelements im unbelasteten Zustand stärker als die in einem Wischfeld der Windschutzscheibe gemessene stärkste Krümmung. Um möglichst eine hohe, dauerhaft gleichbleibende Festigkeit, Elastizität und Formstabilität zu erreichen, wird in der DE 197 38 232.0 vorgeschlagen, Fasern dem Kunststoff beizumischen, und zwar Glasfasern, Kohlefasern usw.

Je nach Kraftfahrzeugtyp variieren die Windschutzscheiben, in Höhe, Breite und Krümmung. Um stets eine gute Wischqualität zu erreichen, müssen die Wischblätter entsprechend für die unterschiedlichen Windschutzscheiben hergestellt werden.

Mit der gattungsbildenden US 005122213 A ist es bekannt geworden, in einem ersten Verfahrenschritt Kunststoffteile aus mehreren Schichten durch Zusammenpressen und Erhitzen bis ungefähr zur Schmelztemperatur der verwendeten Kunststoffe in eine ebene Form zu bringen und in einem zweiten Verfahrenschritt unter Einfluss von Druck und einer Temperatur, die oberhalb der Schmelztemperatur liegt, die gewünschte Form zu erzeugen.

### Vorteile der Erfindung

Die Erfindung geht von der Erkenntnis aus, daß bei längerer Belastung eines Kunststoffteils, insbesondere unter Wärmeeinwirkung, der Kunststoff in den Belastungszonen zu kriechen beginnt. Molekülketten des Kunststoffs richten sich in einer Zugspannungszone in Zugspannungsrichtung aus. Sind dem Kunststoff Fasern zur Verbesserung der Formstabilität beigemischt, können diese durch einen bestimmten Spritzvorgang bereits in Zugspannungsrichtung ausgerichtet sein. Beginnt der Kunststoff in der. Zugspannungszone zu kriechen, werden die bis dahin locker in den Kunststoff eingebetteten Fasern in Zugspannungsrichtung dauerhaft gespannt.

Sind die Molekülketten in Zugspannungsrichtung dauerhaft ausgerichtet und die Fasern gespannt, reduziert sich die Kriechgeschwindigkeit. Erfindungsgemäß wird dieser Effekt genutzt, indem eine in einem ersten Verfahrensschritt hergestellte Grundform eines Kunststoffteils in einem zweiten formgebenden Verfahrensschritt in eine Richtung verformt und verspannt wird wie bei einer späteren Verwendung, erwärmt und in diesem Zustand gehalten wird, bis sich in mindestens einer sich bildenden Zugspannungszone im Kunststoffteil eine Materialstruktur des Kunststoffteils dauerhaft in Zugspannungsrichtung ausrichtet. Unter Materialstruktur werden Molekülketten und insbesondere in den Kunststoff eingebrachte Fasern verstanden. Wird das Kunststoffteil bei der Verwendung belastet, sind die Molekülketten in der Zugspannungszone im Kunststoffteil bereits in Zugspannungsrichtung ausgerichtet und die Fasern gespannt. Das Kunststoffteil besitzt nach dem zweiten formgebenden Verfahrensschritt eine besonders hohe, dauerhaft gleichbleibende Festigkeit, Elastizität und Formstabilität, insbesondere unter Wärmeeinwirkung. Das Kunststoffteil wird beim zweiten formgebenden Verfahrensschritt dauerhaft um einen gewissen Betrag verformt. Dieser Betrag wird beim ersten formgebenen Verfahrensschritt berücksichtigt bzw. bei der Herstellung einer Gußform für ein Spritzgußverfahren. Die Grundform weicht um den Betrag von der Sollform ab.

Als Kunststoff können thermoplastische Kunststoffe verwendet werden, denen vorteilhaft Kohlefasern, Glasfasern, Paramitfasern, Polyamidfasern, Polyesterfasern usw. beigemischt sind. Zur Verbesserung der Eigenschaften des Kunststoffs kann ferner zumindest ein mineralischer Füllstoff beigemischt werden. Dazu eignen sich insbesondere Kreide, Talkum und Silikate.

Um eine günstige Strömungsrichtung und Ausrichtung der Fasern beim Spritzgießen des Kunststoffteils zu erhalten, wird insbesondere bei großen und/oder langen dünnen Kunststoffteilen der Kunststoff mit einem hohen Druck in eine meist geteilte Gußform eingebracht. Die geteilte Gußform muß zusammengehalten und für die hohen Drücke ausgelegt werden, wodurch diese teuer sind.

Wird ein Kunststoffteil in eine Form gepreßt, dabei verformt, verspannt und erwärmt, entstehen innerhalb des Kunststoffteils unterschiedliche Spannungszonen, die bei der Erwärmung dazu führen, daß der Kunststoff in den Spannungszonen zu kriechen beginnt. Das Kunststoffteil paßt sich dadurch immer weiter der Form an. Das Kunststoffteil paßt sich um so mehr der Form an, je höher die innere Spannung im Kunststoffteil und Temperatur sind sowie je länger die Verformungsdauer ist. Erfindungsgemäß wird im zweiten formgebenden Verfahrensschritt die Grundform dauerhaft verformt und einer Sollform angepaßt, wobei durch Variieren von Spannungshöhe und/oder einem Spannungsverlauf im Kunststoffteil, von Temperatur und/oder Spannungsdauer verschiedene Sollformen erreicht werden. Ferner ist möglich, das Kunststoffteil in einzelnen Bereichen unterschiedlichen Temperaturen auszusetzen. Es können mit einer Gußform und einer Vorrichtung für den zweiten formgebenden Verfahrensschritt zahlreich verschiedene Sollformen geschaffen werden. Mehrere Gußformen für den ersten formgebenden Verfahrensschritt und Kosten werden eingespart. Ferner wird gleichzeitig mit dem zweiten Verfahrensschritt die Formstabilität verbessert.

Das erfindungsgemäße Verfahren kann für Kunststoffteile, wie beispielsweise Kunststoffhalterungen, Kunststoffederelemente usw. eingesetzt werden. Besonders vorteilhaft wird das erfindungsgemäße Verfahren jedoch bei einem langgestreckten, eine Wischleiste haltenden Tragelement eines Wischblatts für ein Kraftfahrzeug verwendet. Die Tragelemente müssen für besonders zahlreich verschiedene Windschutzscheiben hergestellt werden. Um möglichst eine gleichbleibend gute Wischqualität zu erzielen, sollten die Tragelemente eine möglichst hohe, dauerhafte Festigkeit, Formbeständigkeit und Elastizität aufweisen. Aus der DE 197 38 232.0 ist bekannt, ein faserverstärktes Kunststoffmaterial in Längsrichtung des Tragelements in eine Gußform einzubringen, um eine vorteilhafte Ausrichtung der Fasern in Längsrichtung des Tragelements und ein weitgehend spannungshomogenes Bauteil zu erreichen. Das Tragelement ist lang und dünn, wodurch der Kunststoff mit einem hohen Druck in die Gußform eingebracht werden muß. Es ist eine kostenintensive Gußform erforderlich. Mit dem erfindungsgemäßen Verfahren können in einem die Formbeständigkeit erhöht und die Anzahl der erforderlichen, kostenintensiven Gußformen reduziert werden. Eine Grundform eines Tragelements kann im zweiten formgebenden Verfahrensschritt auf verschiedene Sollformen mit bestimmten Krümmungsradien für verschiedene Windschutzscheiben dauerhaft angepaßt werden.

Die Tragelemente sind im unbelasteten Zustand in Längsrichtung gekrümmt. Drückt ein Wischarm das Tragelement auf die Windschutzscheibe, weitet sich dieses auf und paßt sich dabei der Krümmung der Windschutzscheibe an. Erfindungsgemäß wird vorgeschlagen, daß die Grundform des Tragelements einen kleineren Krümmungsradius aufweist als die Sollformen und im zweiten formgebenden Verfahrensschritt auf einen größeren Krümmungsradius aufgeweitet wird. Dabei wird beim Aufweiten das Tragelement in eine Richtung verformt wie bei einer Verwendung des Tragelements auf der Windschutzscheibe, wodurch gleichzeitig mit dem Anpassen an eine bestimmte Sollform, die Formbeständigkeit erhöht wird. Wird das Tragelement auf die Windschutzscheibe gedrückt, wird dieses aufgebogen. Im Tragelement entsteht auf einer der Windschutzscheibe zugewandten Seite unterhalb einer neutralen Faser eine Zugspannungszone und auf einer der Windschutzscheibe abgewandten Seite, oberhalb der neutralen Faser eine Druckspannungszone. Durch den zweiten formgebenden Verfahrensschritt ist bereits die Materialstruktur in der Zugspannungszone in Zugspannungsrichtung ausgerichtet und in dem Kunststoff beigemischte Fasern sind in Zugspannungsrichtung gespannt.

Das Tragelement kann verformt und dabei verspannt werden, indem beispielsweise das Tragelement in Längsrichtung auf Zug belastet und möglicherweise gezielt einzelne Querkräfte über die Länge des Tragelements eingebracht werden. Besonders einfach kann jedoch das Tragelement verformt und ein gewünschter Spannungsverlauf im Tragelement erzeugt werden, indem das Tragelement auf eine Fläche gepreßt wird. Um unterschiedliche Spannungsverläufe zu erreichen, können Flächen mit verschiedenen Krümmungen verwendet werden, beispielsweise ebene, konkave oder konvexe Flächen und/oder Flächen, deren Krümmungen verändert werden können. Das Tragelement bleibt auf die Fläche gepreßt, bis sich das Tragelement dauerhaft verformt und eine Sollform erreicht hat.

Die bei der Verformung des Tragelements sich aufbauenden Spannungen stehen in Wechselwirkung mit den Auflagekräften des Tragelements auf einer Fläche und stehen in Wechselwirkung mit dem Grad der sich einstellenden dauerhaften Verformung des Tragelements, und zwar wird bei gleicher Spannungsdauer und Temperatur bei einer hohen Spannung ein hoher Grad und bei einer kleinen Spannung ein kleiner Grad einer dauerhaften Verformung erreicht. Ferner ist der Grad der bleibenden Verformung von der Dicke und Breite des Tragelements abhängig. In einem Bereich großer Dicke und Breite des Tragelements stellt sich bei gleicher Spannung und Temperatur ein kleinerer Grad einer bleibenden Verformung ein als in einem Bereich mit einer kleinen Dicke und Breite. Entscheidend für eine gute Wischqualität ist u.a. die sich einstellende Auflagekraft. Nach dem zweiten formgebenden Verfahrensschritt sollte daher mit einer Sollform eine bestimmte Auflagekraft bzw. ein bestimmter Auflagekräfteverlauf über die Länge des Tragelements erreicht werden.

In einer Ausgestaltung der Erfindung wird vorgeschlagen, daß die Auflagekraft im zweiten formgebenden Verfahrensschritt des Tragelements auf der Fläche gemessen, mit einer Sollauflagekraft verglichen und durch Einstellen von Spannungshöhe, Spannungsverlauf, Temperatur und/oder Spannungsdauer an die Sollauflagekraft angepaßt werden. Es kann gezielt auf einzelne Bereiche des Tragelements eingewirkt und die Grundform einfach und besonders exakt auf verschiedene Sollformen angepaßt werden, die bestimmte Auflagekräfteverläufe aufweisen. Komplexe Wechselbeziehungen zwischen Spannung, einer sich einstellenden bleibenden Verformung, der bei der Verwendung sich einstellenden Auflagekraft auf der Windschutzscheibe und der Dicke und Breite des Tragelements in einzelnen Bereichen müssen nicht beachtet werden. Vorteilhaft können auch Flächen verwendet werden, die Krümmungen von verschiedenen Windschutzscheiben aufweisen, wodurch einfach erfaßt werden kann, ob ein bestimmter Auflagekräfteverlauf erreicht ist.

Anstatt die Auflagekraft zu messen und mit einer Sollauflagekraft bzw. mit einem Sollauflagekräfteverlauf zu vergleichen, können die Temperaturwerte, die erforderliche Verformung und die Verformungsdauer empirisch ermittelt werden, um bestimmte Sollformen zu erzeugen. Beispielsweise, indem eine Grundform auf eine ebene Fläche gedrückt und gemessen wird wie weit sich die Grundform nach 10 Sekunden und nach 20 Sekunden bei 100°C verformt hat und welche Auflagekräfte die Tragelemente nach 10 Sekunden und nach 20 Sekunden aufweisen.

Um eine gleichmäßige oder zu den Enden abnehmende Auflagekraft auf einer Windschutzscheibe zu erzeugen, besitzt das Tragelement in der Regel in Längsrichtung zur Mitte eine zunehmende Dicke und Breite. Wird das Tragelement auf eine ebene Fläche gedrückt, nimmt in Längsrichtung zur Mitte die sich einstellende Spannung im Tragelement zu. Da der Grad der bleibenden Verformung mit zunehmender Dicke und Breite abnimmt und mit zunehmender Spannung zunimmt, können durch eine geeignete Wahl der Geometrie die Effekte gegenseitig ausgeglichen und trotz einer ebenen Fläche eine gleichmäßige Verformung des Tragelements erreicht werden. Ferner kann eine bleibende Verformung direkt am Tragelement gemessen werden, beispielsweise mit Dehnungsmeßstreifen.

Um zu vermeiden, daß innere Spannungen zu ungewünschten Verformungen führen, wird vorgeschlagen, im ersten formgebenden Verfahrensschritt ein weitgehend spannungshomogenes Kunststoffteil herzustellen. Spannungshomogene Tragelemente können beispielsweise erreicht werden, indem im ersten formgebenden Verfahrensschritt bzw. in einem Spritzgußverfahren das Kunststoffmaterial in Längsrichtung in die Gußform eingespritzt wird, und zwar an einem Ende des Tragelements in eine Längsrichtung, an beiden Enden oder in der Mitte in beide Längsrichtungen.

Ferner wird vorgeschlagen, daß im ersten formgebenden Verfahrensschritt ein Kunststoffteil mit weitgehend gleichmäßigen Querschnittsänderungen hergestellt wird. Abrupte Querschnittsänderungen führen bei der Verformung im zweiten Verfahrensschritt zu Spannungsspitzen und damit zu ungewünschten Verformungen.

In einer Ausgestaltung der Erfindung wird vorgeschlagen, daß eine im ersten formgebenden Verfahrensschritt hergestellte Grundform des Tragelements mit einer Grundlänge in einem weiteren Verfahrensschritt auf zumindest eine Sollänge gekürzt wird. Die Grundform kann in einer Länge mit einem Gußwerkzeug hergestellt werden. Gußformen für verschiedene Längen und damit verbundene Kosten können eingespart werden.

Besitzt ein Tragelement durch eine bestimmte Geometrie und/oder Materialwahl eine über die Länge konstante Auflagekraft oder eine zu den Enden abnehmende Auflagekraft und wird dieses Tragelement gekürzt, wird ein von der Mitte des Tragelements bis zu den freien Enden wirkender Hebelarm kürzer und die sich auf der Windschutzscheibe einstellende Auflagekraft steigt an den Enden an. Je mehr das Tragelement gekürzt wird, um so größer ist der Anstieg der Auflagekraft an den Enden.

In einer Ausgestaltung wird vorgeschlagen, daß das gekürzte Tragelement einer Windschutzscheibe mit einem kleineren Krümmungsradius zugewiesen wird, als das ungekürzte Tragelement, beispielsweise, indem auf dem Tragelement oder einer Verpakkung des Tragelements angegeben wird, für welches Kraftfahrzeug das Tragelement bei welcher Länge geeignet ist. Ohne daß das Tragelement in einem sich an das Kürzen anschließenden formgebenden Verfahrensschritt verformt wird, können einfach mehrere Anwendungsmöglichkeiten geschaffen werden. Der Herstellungsaufwand und die Herstellungskosten werden reduziert. Wird jedoch das Tragelement um ein großes Stück gekürzt, steigt die Auflagekraft an den Enden stark an, so daß ein sich daran anschließender weiterer formgebender Verfahrensschritt erforderlich sein könnte, indem das Tragelement auf eine Sollform gebracht wird.

Um das Tragelement möglichst ohne oder mit geringem Werkzeugaufwand auf eine bestimmte Länge kürzen zu können, sind in einer Ausgestaltung der Erfindung Sollbruchstellen am Tragelemente angebracht, beispielsweise eine Kerbe und/oder ein Bereich mit einer geringeren Werkstoffdicke. Eine von dem Tragelement gehaltene Wischleiste kann anschließend beispielsweise mit einem Messer gekürzt werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines Wischblatts mit einem eine Wischleiste haltenden Tragelement,
- Fig. 2: eine Draufsicht auf ein Wischblatt nach Fig. 1,
- Fig. 3: einen Schnitt entlang der Linie III-III in Fig. 1,
- Fig. 4, 5 u. 6: einen Ablauf eines formgebenden Verfahrensschritts an einem schematisch dargestellten Tragelement,
- Fig. 7: einen vergrößerten Ausschnitt eines Schnitts entlang der Linie VII-VII in Fig. 2 vor einem zweiten formgebenden Verfahrensschritt,
- Fig. 8: einen mit VIII bezeichneten Ausschnitt in Fig. 7 in vergrößerter Darstellung vor einem zweiten formgebenden Verfahrensschritt,
- Fig. 9: einen Ausschnitt nach Fig. 7 nach einem zweiten formgebenden Verfahrensschritt,
- Fig. 10: einen Ausschnitt nach Fig. 8 nach einem zweiten formgebenden Verfahrensschritt,
- Fig. 11-14: verschiedene Flächenformen,
- Fig. 15: einen Ausschnitt eines Tragelements im unbelasteten Zustand,
- Fig. 16: einen Ausschnitt eines Tragelements im belasteten Zustand,
- Fig. 17: einen Ausschnitt eines gekürzten Tragelements im belasteten Zustand,
- Fig. 18: einen Ausschnitt eines Tragelements nach Fig. 17 an einer Windschutzscheibe mit kleinem Krümmungsradius,
- Fig. 19: eine schematische Darstellung von Ablaufmöglichkeiten von Verfahrensschritten und
- Fig. 20: eine schematische Darstellung einer Vorrichtung zur Durchführung einzelner Verfahrensschritte.

### Beschreibung der Ausführungsbeispiele

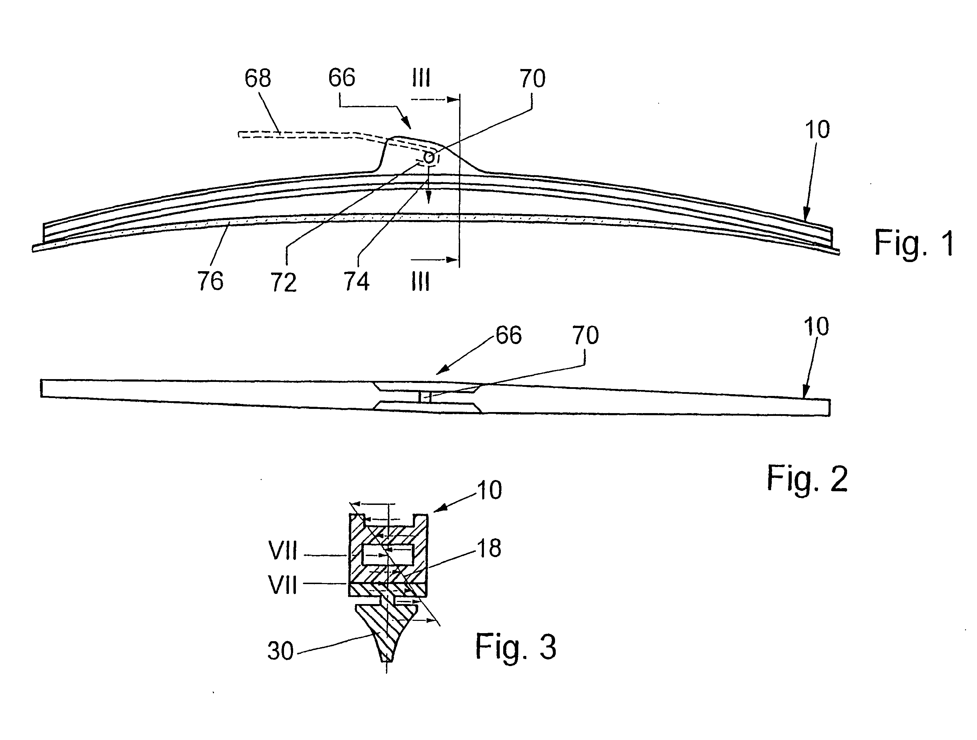

Fig. 1 und 2 zeigen ein Wischblatt mit einem federelastischen langgestreckten Tragelement 10, an dessen Unterseite eine langgestreckte gummielastische Wischleiste 30 längsachsenparallel befestigt ist. An der Oberseite des aus einem thermoplastischen Kunststoff gefertigten Tragelements 10 ist in dessen Mittelabschnitt eine Anschlußvorrichtung 66 mit einem Gelenkbolzen 70 angeordnet, in den ein Wischarm 68 mit einem hakenförmigen Ende 72 eingehängt ist. Der Wischarm 68 belastet das Tragelement 10 in Richtung 74 einer Windschutzscheibe 76, wodurch sich das vorgebogene Tragelement 10 solange aufbiegt bis es über die gesamte Länge mit einer geeigneten Auflagekraft auf der Windschutzscheibe 76 mit der Wischleiste 30 zum Liegen kommt.

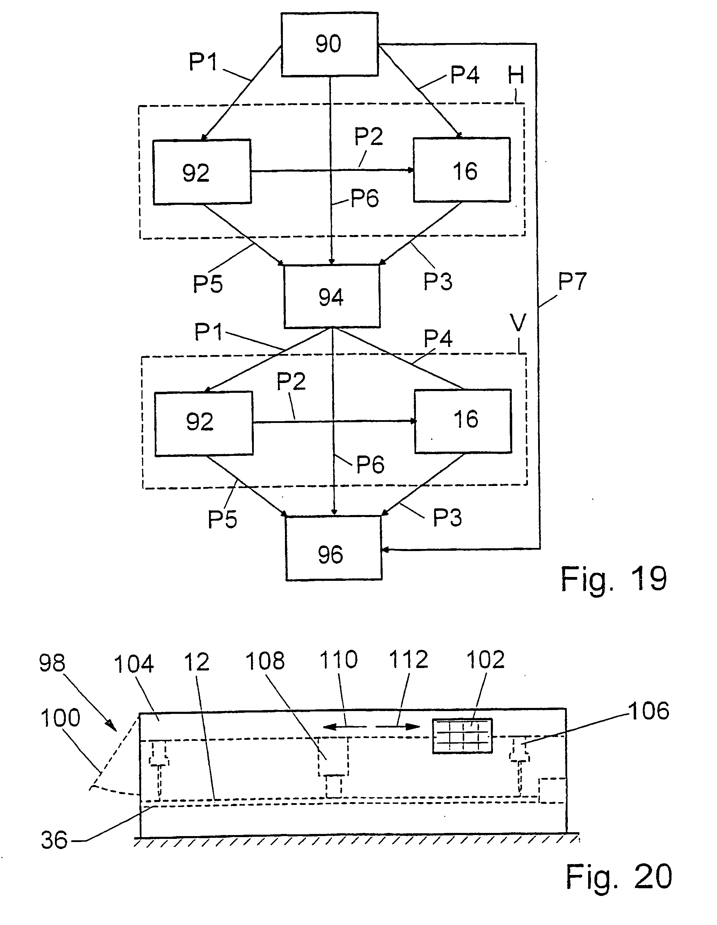

Erfindungsgemäß wird eine in einem ersten Verfahrensschritt 90 hergestellte Grundform 14 des Tragelements 10 in einem zweiten formgebenden Verfahrensschritt 16 in eine Richtung verformt wie bei einer späteren Verwendung des Tragelements 10 auf der Windschutzscheibe 76, erwärmt und in diesem Zustand gehalten, bis in einer Zugspannungszone 18 im Tragelement 10 sich eine Materialstruktur des Tragelements 10 dauerhaft in Zugspannungsrichtung 20, 22 ausrichtet (Fig. 3 bis 10 u. Fig. 19).

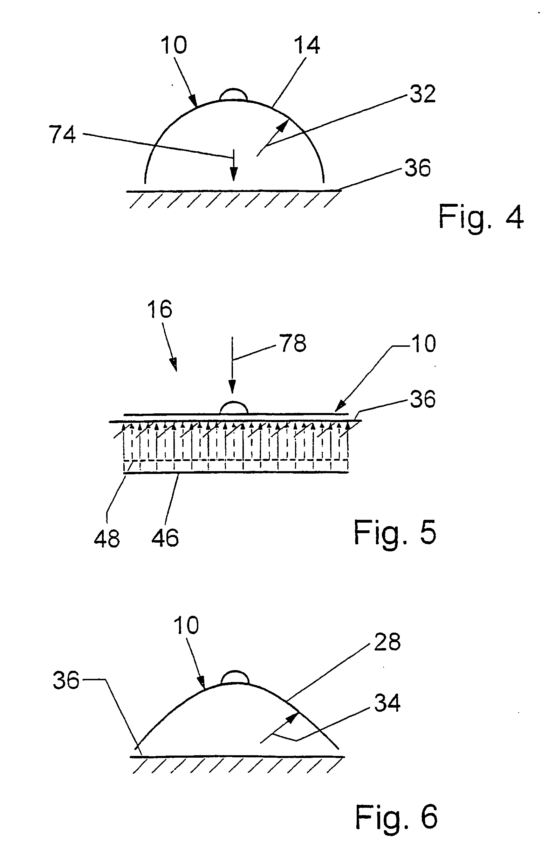

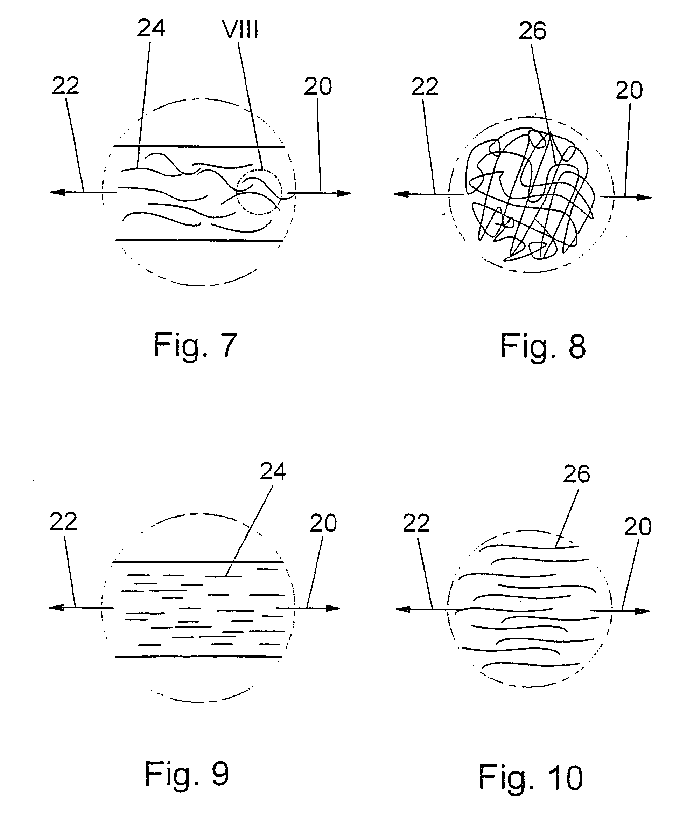

Im ersten formgebenden Verfahrensschritt 90, einem nicht näher dargestellten Spritzgußverfahren, wird ein faserverstärkter Kunststoff verwendet. Der Kunststoff wird in Längsrichtung des Tragelements 10 in eine Gußform eingespritzt, daß sich die Fasern 24 in Längsrichtung ausrichten (Fig. 7). Im zweiten formgebenden Verfahrensschritt 16 (Fig. 5) beginnt in der Zugspannungszone 18 (Fig. 3) das Material in Zugspannungsrichtung 20, 22 zu kriechen bzw. zu fließen. Dabei richten sich Molekülketten 26 des Kunststoffmaterials in Zugspannungsrichtung 20, 22 dauerhaft aus und die ausgerichteten Fasern 24 werden in Zugspannungsrichtung 20, 22 dauerhaft gespannt (Fig. 7, 8, 9 und 10). Das Tragelement 10 besitzt nach dem zweiten formgebenden Verfahrensschritt 16 eine besonders hohe, dauerhaft gleichbleibende Festigkeit, Elastizität und Formstabilität, insbesondere unter Wärmeeinwirkung.

Im zweiten Verfahrensschritt 16 wird ferner die Grundform 14 dauerhaft verformt und einer Sollform 28 angepaßt, und zwar wird die Grundform 14 auf eine Fläche 36 mit einer Kraft 78 gedrückt und von einem Krümmungsradius 32 auf einen größeren Krümmungsradius 34 dauerhaft aufgeweitet (Fig. 4, 5 und 6). Um eine Sollform 28 zu erzielen, die bei einer bestimmten Windschutzscheibe bestimmte Sollauflagekräfte 48 bzw. einen Sollauflagekräfteverlauf aufweist, werden im zweiten Verfahrensschritt 16 die Auflagekräfte 46 des Tragelements 10 auf der Fläche 36 gemessen und mit Sollauflagekräften 48 verglichen (Fig. 5). Das Tragelement 10 wird solange auf die Fläche 36 bei einer bestimmten Temperatur gedrückt, bis die gemessenen Auflagekräfte 46 mit den Sollauflagekräften 48 übereinstimmen. Beim Drücken des Tragelements 10 auf die Fläche 36, wird das Tragelement 10 verformt und es entsteht abhängig vom Grad der Verformung ein bestimmter Spannungsverlauf im Tragelement 10. Durch Variieren von Spannungshöhe und/oder Spannungsverlauf im Tragelement 10, von Temperatur und/oder Spannungsdauer, können verschiedene Sollformen 28 erreicht werden. Verschiedene Spannungshöhen und verschiedene Spannungsverläufe können einfach mit unterschiedlich gekrümmten Flächen 38, 40, 42, 44 erreicht werden. Im erfindungsgemäßen Verfahrensschritt 16 wird die Formbeständigkeit verbessert und die mit einer Gußform hergestellte Grundform 14 des Tragelements 10 kann auf zahlreich verschiedene Sollformen 28 für unterschiedliche Windschutzscheiben angepaßt werden. Gußformen und Kosten werden eingespart.

Um im zweiten Verfahrensschritt 16 Spannungsspitzen an abrupten Querschnittsänderungen zu vermeiden, wird im ersten formgebenden Verfahrensschritt 90 ein Tragelement 10 mit gleichmäßigen Querschnittsänderungen hergestellt (Fig. 1 und 2).

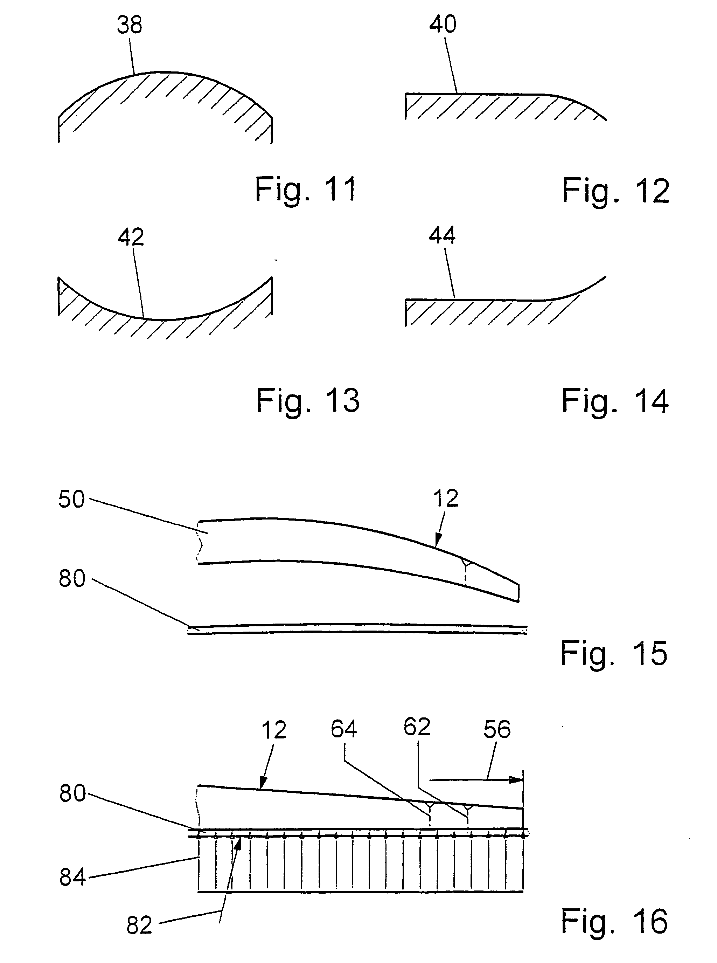

In einer Ausgestaltung der Erfindung wird eine im ersten Verfahrensschritt 90 hergestellte Grundform 50 eines Tragelements 12 mit einer Grundlänge 56 in einem weiteren Verfahrensschritt 92 auf zumindest eine Sollänge 52, 54 gekürzt (Fig. 15, 16, 17 und 19). Das Tragelement 12 weist an seinen Enden jeweils zwei Sollbruchstellen 62, 64 auf, in denen das Tragelement 12 ohne großen Werkzeugaufwand schnell auf eine definierte Sollänge 52, 54 gekürzt werden kann.

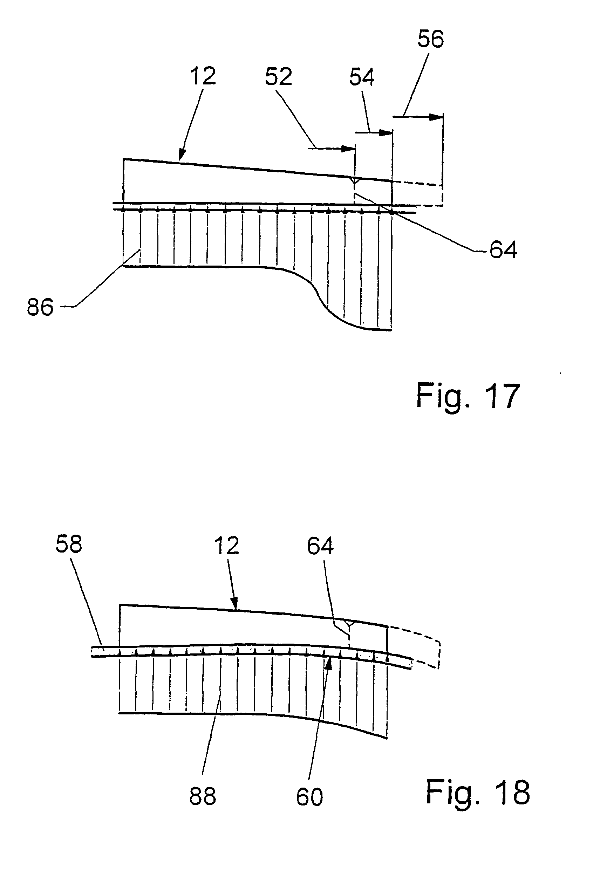

Das Tragelement 12 kann ungekürzt für eine große Windschutzscheibe 80 mit einem großen Krümmungsradius 82 verwendet werden (Fig. 15 und 16). Wird das Tragelement 12 vom Wischarm 68 auf die Windschutzscheibe 80 gedrückt, stellt sich über die Länge des Tragelements 12 eine konstante Auflagekraft 84 ein. Wird das Tragelement 12 gekürzt, wird ein von der Mitte des Tragelements 12 bis zu den freien Enden wirkender Hebelarm kürzer und eine sich auf der Windschutzscheibe 80 einstellende Auflagekraft 86 steigt an den Enden an (Fig. 17). Je mehr das Tragelement 12 gekürzt wird, um so größer ist der Anstieg der Auflagekraft 84 an den Enden. Das gekürzte Tragelement 12 wird einer Windschutzscheibe 58 mit einem kleineren Krümmungsradius 60, insbesondere im äußeren Bereich der Windschutzscheibe 58, zugewiesen als das ungekürzte Tragelement 12. Durch den kleineren Krümmungsradius 60 der Windschutzscheibe 58 im äußeren Bereich wird das gekürzte Tragelement 12 weniger verformt und verspannt, wodurch die Auflagekraft 86 am Ende des Tragelements 12 abnimmt und sich wieder eine über die Länge des Tragelements 12 konstante Auflagekraft 88 einstellt (Fig. 18).

Wird jedoch das Tragelement 12 um ein großes Stück gekürzt, steigt die Auflagekraft an den Enden stark an, so daß ein sich daran anschließender weiterer formgebende Verfahrensschritt 16 erforderlich sein könnte. In Fig. 19 sind verschiedene Abiolgemöglichkeiten der erfindungsgemäßen Verfahrensschritte 16, 90, 92 dargestellt. Nach dem ersten formgebenden Verfahrensschritt 90 kann das Tragelement 12 beim Hersteller H entlang der Pfade P1, P2, P3 in einem Verfahrensschritt 92 gekürzt, anschließend in einem zweiten formgebenden Verfahrensschritt 16 dauerhaft verformt und in einem Schritt 94 ausgeliefert werden, beispielsweise an eine Verkaufsstätte V bzw. eine Werkstatt. Ferner ist möglich, daß das Tragelement 12 entlang P4 und P3 nur verformt, entlang P1 und P5 nur gekürzt oder direkt als Grundform 50 des Tragelements 12 entlang P6 ausgeliefert wird.

Bei der Verkaufsstätte V angekommen, kann das Tragelement 12 vor einer Verwendung 96 wieder entlang der Pfade P1, P2, P3 in einem Verfahrensschritt 92 gekürzt und anschließend in einem zweiten formgebenden Verfahrensschritt 16 verformt werden. Ferner ist möglich, daß das Tragelement 12 entlang P4 und P3 nur verformt, entlang P1 und P5 nur gekürzt oder direkt vom Hersteller H entlang P6 verwendet wird. Entlang P7 kann möglicherweise die im ersten formgebenden Verfahrensschritt 90 hergestellt Grundform 50 des Tragelements 12 verwendet werden. Eine Grundform 50 kann damit beim Hersteller H und/oder bei einer Verkaufsstätte V auf bestimmte Windschutzscheiben angepaßt werden. Der Aufwand und die Kosten beim Hersteller H und das Lagervolumen in den Verkaufsstätten V können reduziert werden. Die Verkaufsstätte V muß nicht für sämtliche Windschutzscheiben einen Vorrat anschaffen.

In Fig. 20 ist eine Vorrichtung dargestellt, in die eine Grundform 50 des Tragelements 12 auf einer Seite 98 durch Öffnen eines Deckels 100 eingeschoben werden kann. Durch Eingabe einer Kraftfahrzeugkennummer, Fabrikat und Fahrzeugtyp, mittels einer Tastatur 102, wird das Tragelement 12 auf eine bestimmte Sollänge 54 in einem Verfahrensschritt 92 gekürzt und in einem formgebenden Verfahrensschritt 16 dauerhaft verformt und einer Sollform 28 angepaßt. Abhängig von der Kraftfahrzeugkennummer werden Temperatur, Verformungsdauer und Länge eingestellt. Das Tragelement 12 wird durch zwei in Längsrichtung 110, 112 verschiebbare und senkrecht zur Fläche 36 ausfahrbare Schneiden 104, 106 gekürzt. Beim formgebenden Verfahrensschritt 16 wird das Tragelement 12 mit einem Zylinder 108 auf die Fläche 36 gedrückt, dabei verformt, verspannt, erwärmt und in diesem Zustand gehalten, bis die Sollform 28 dauerhaft erreicht ist. Beim Hersteller H und insbesondere bei der Verkaufsstätte können dadurch besonders einfach und schnell Grundformen 50 des Tragelements 12 auf bestimmte Windschutzscheiben von verschiedenen Kraftfahrzeugen angepaßt werden.

### Bezugszeichen

- 10: Tragelement
- 12: Tragelement
- 14: Grundform
- 16: Verfahrensschritt
- 18: Zugspannungszone
- 20: Zugspannungsrichtung
- 22: Zugspannungsrichtung
- 24: Fasern
- 26: Molekühlketten
- 28: Sollform
- 30: Wischleiste
- 32: Krümmungsradius
- 34: Krümmungsradius
- 36: Fläche
- 38: Fläche 78 Kraft
- 40: Fläche
- 42: Fläche
- 44: Fläche
- 46: Auflagekräfte
- 48: Sollauflagekräfte
- 50: Grundform
- 52: Sollänge
- 54: Sollänge
- 56: Grundlänge
- 58: Windschutzscheibe
- 60: Krümmungsradius
- 62: Sollbruchstelle
- 64: Sollbruchstelle
- 66: Anschlußvorrichtung
- 68: Wischarm
- 70: Gelenkbolzen
- 72: Ende
- 74: Richtung
- 76: Windschutzscheibe
- 80: Windschutzscheibe
- 82: Krümmungsradius
- 84: Auflagekraft
- 86: Auflagekraft
- 88: Auflagekraft
- 90: Verfahrensschritt
- 92: Verfahrensschritt
- 94: Auslieferung
- 96: Verwendung
- 98: Seite
- 100: Deckel
- 102: Tastatur
- 104: Schneide
- 106: Schneide
- 108: Zylinder
- 110: Längsrichtung
- 112: Längsrichtung
- P1-P7: Pfade
- H: Hersteller
- V: Verkaufsstätte

## Patentansprüche

1. Verfahren zur Herstellung eines Kunststoffteils (10) mit einem ersten formgebenden Verfahrensschritt (90), wobei eine im ersten Verfahrensschritt (90) hergestellte Grundform (14) des Kunststoffteils (10) in einem zweiten formgebenden Verfahrensschritt (16) in eine Richtung verformt und verspannt wird, und im zweiten formgebenden Verfahrensschritt (16) die Grundform (14) dauerhaft verformt und an eine Sollform (28) angepaßt wird, wobei durch Variieren von Spannungshöhe und/oder einem Spannungsverlauf im Kunststoffteil (10), von Temperatur und/oder Spannungsdauer verschiedene Sollformen (28) erreicht werden, **dadurch gekennzeichnet, daß** das Kunststoffteil (10) ein langgestrecktes Tragelement (10) ist, das mit einer Wischleiste (30) zu einem Wischblatt für ein Kraftfahrzeug verbunden wird, daß die Grundform (14) des Tragelements (10) einen kleineren Krümmungsradius (32) aufweist als die Sollform (28), der im zweiten formgebenden Verfahrensschritt (16) auf einen größeren Krümmungsradius (34) aufgeweitet wird.

2. Verfahren nach Anspruch 1, **dadurch gekennzeichnet, daß** im ersten formgebenden Verfahrensschritt (90) ein faserverstärkter Kunststoff verwendet wird und das Kunststoffteil (10) im zweiten formgebenden Verfahrensschritt (16) verformt, verspannt, erwärmt und in diesem Zustand gehalten wird, bis die Fasern (24) in Zugspannungsrichtung (20, 22) dauerhaft gespannt ist.

3. Verfahren nach Anspruch 1 oder 2, **dadurch gekennzeichnet, daß** das Kunststoffteil (10) im ersten formgebenden Verfahrensschritt (90) entsprechend einer späteren Verwendung erwärmt und in diesem Zustand gehalten wird, bis sich in mindestens einer sich bildenden Zugspannungszone (18) im Kunststoffteil (10) eine Materialstruktur des Kunststoffteils (10) dauerhaft in Zugspannungsrichtung (20, 22) ausrichtet.

4. Verfahren nach einem der Ansprüche 1 bis 3, **dadurch gekennzeichnet, daß** das Tragelement (10) im zweiten formgebenden Verfahrensschritt (16) auf eine Fläche (36, 38, 40, 42, 44) gepreßt, dabei verformt und ein innerer Spannungsverlauf im Tragelement (10) erzeugt wird.

5. Verfahren nach Anspruch 4, **dadurch gekennzeichnet, daß** im zweiten formgebenden Verfahrensschritt (16) Auflagekräfte (46) des Tragelements (10) auf der Fläche (36) gemessen, mit Sollauflagekräften (48) verglichen und durch Einstellen von Spannungshöhe und/oder Spannungsverlauf im Tragelement (10), Temperatur und/oder Spannungsdauer an die Sollauflagekräfte (48) angepaßt werden.

6. Verfahren nach einem der Ansprüche 1 bis 5, **dadurch gekennzeichnet, daß** im ersten formgebenden Verfahrensschritt (90) ein weitgehend spannungshomogenes Tragelement (10) hergestellt wird.

7. Verfahren nach einem der Ansprüche 1 bis 6, **dadurch gekennzeichnet, daß** im ersten formgebenden Verfahrensschritt (90) ein Tragelement (10) mit weitgehend gleichmäßigen Querschnittsänderungen hergestellt wird.

8. Verfahren nach einem der Ansprüche 1 bis 7, **dadurch gekennzeichnet, daß** eine im ersten Verfahrensschritt (90) hergestellte Grundform (50) des Tragelements (12) mit einer Grundlänge (56) in einem weiteren Verfahrensschritt (92) auf zumindest eine Sollänge (52, 54) gekürzt wird.

9. Verfahren nach einem der Ansprüche 1 bis 8, **dadurch gekennzeichnet, daß** das Tragelement (12) zumindest in einem Verfahrensschritt (92) gekürzt und in zumindest einem zweiten formgebenden Verfahrensschritt (16) dauerhaft verformt und einer Sollform (28) angepaßt wird.

10. Verfahren nach Anspruch 8 oder 9, **dadurch gekennzeichnet, daß** das Tragelement (12) einer Windschutzscheibe (58) zugeordnet und **gekennzeichnet** wird, wobei gekürzte Tragelemente einer Windschutzscheibe mit einem kleineren Krümmungsradius (60) zugewiesen werden als ungekürzte Tragelemente (12).

11. Verfahren nach einem der vorhergehenden Ansprüche, **dadurch gekennzeichnet, daß** in eine Steuerung eine Kennummer eingegeben und dem entsprechend das Tragelement (12) auf eine bestimmte Sollänge (52, 54) gekürzt und/oder in einem zweiten formgebenden Verfahrensschritt (16) dauerhaft verformt und einer bestimmten Sollform (28) angepasst wird.

12. Verfahren nach Anspruch 11, **dadurch gekennzeichnet, daß** die Kennummer zumindest teilweise identisch zu einer Kennummer eines Kraftfahrzeugs gewählt wird.

13. Wischblatt hergestellt nach einem Verfahren nach einem der vorhergehenden Ansprüche, mit einem Tragelement (12), **dadurch gekennzeichnet, daß** das Tragelement (12) Sollbruchstellen (62, 64) aufweist.

## Claims

1. Method for producing a plastic part (10) with a first forming method step (90), a basic form (14) of the plastic part (10) produced in the first method step (90) being deformed and distorted in one direction in a second forming method step (16) and the basic form (14) being permanently deformed and adapted to a desired form (28) in the second forming method step (16), various desired forms (28) being achieved by varying the stress level and/or a stress pattern in the plastic part (10), varying the temperature and/or varying the duration of the stress, **characterized in that** the plastic part (10) is an elongated supporting element (10), which is connected to a wiper strip (30) to form a wiper blade for a motor vehicle, **in that** the basic form (14) of the supporting element (10) has a smaller radius of curvature (32) than the desired form (28), which is widened in the second forming method step (16) to a greater radius of curvature (34).

2. Method according to Claim 1, **characterized in that**, in the first forming method step (90), a fibre-reinforced plastic is used and, in the second forming method step (16), the plastic part (10) is deformed, distorted, heated and kept in this state until the fibres (24) are permanently stressed in the direction of tensile stress (20, 22).

3. Method according to Claim 1 or 2, **characterized in that**, in the first forming method step (90), the plastic part (10) is heated in a way corresponding to later use and is kept in this state until a material structure of the plastic part (10) is permanently aligned in the direction of tensile stress (20, 22) in at least one tensile stress zone (18) forming in the plastic part (10).

4. Method according to one of Claims 1 to 3, **characterized in that**, in the second forming method step (16), the supporting element (10) is pressed onto a surface (36, 38, 40, 42, 44), thereby deformed and an internal stress pattern is produced in the supporting element (10).

5. Method according to Claim 4, **characterized in that**, in the second forming method step (16), bearing forces (46) of the supporting element (10) are measured on the surface (36), compared with desired bearing forces (48) and adapted to the desired bearing forces (48) by setting the stress level and/or stress pattern in the supporting element (10), the temperature and/or the duration of the stress.

6. Method according to one of Claims 1 to 5, **characterized in that**, in the first forming method step (90), a supporting element (10) with largely homogeneous stress is produced.

7. Method according to one of Claims 1 to 6, **characterized in that**, in the first forming method step (90), a supporting element (10) with largely uniform cross-sectional changes is produced.

8. Method according to one of Claims 1 to 7, **characterized in that** a basic form (50) of the supporting element (12) with a basic length (56) produced in the first method step (90) is shortened to at least one desired length (52, 54) in a further method step (92).

9. Method according to one of Claims 1 to 8, **characterized in that** the supporting element (12) is shortened, at least in one method step (92), and permanently deformed and adapted to a desired form (28) in at least one second forming method step (16).

10. Method according to Claim 8 or 9, **characterized in that** the supporting element (12) is assigned to a windscreen (58) and provided with an identification, shortened supporting elements being assigned to a windscreen with a smaller radius of curvature (60) than unshortened supporting elements (12).

11. Method according to one of the preceding claims, **characterized in that** an identity number is entered in a control and the supporting element (12) is accordingly shortened to a specific desired length (52, 54) and/or permanently deformed and adapted to a specific desired form (28) in a second forming method step (16).

12. Method according to Claim 11, **characterized in that** the identity number is chosen to be at least partly identical to an identity number of a motor vehicle.

13. Wiper blade produced by a method according to one of the preceding claims, with a supporting element (12), **characterized in that** the supporting element (12) has predetermined breaking points (62, 64).

## Revendications

1. Procédé de fabrication d'une pièce en matière plastique (10) selon une première étape de procédé de mise en forme (90), et la forme de base (14) de la pièce en matière plastique (10) réalisée dans cette première étape de procédé (90) étant déformée dans une direction et mise en contrainte au cours d'une seconde étape de procédé (16) de mise en forme, et dans cette seconde étape de procédé et de mise en forme (16), la forme de base (14) est déformée de manière permanente et est adaptée à une forme de consigne (28), et
en modifiant le niveau de tension et/ou l'évolution de la tension dans la pièce en matière plastique (10) par la température et/ou la durée de la tension, on obtient différentes formes de consigne (28),
**caractérisé en ce que**
la pièce en matière plastique (10) est un élément de support (10), allongé, relié à une lame d'essuie-glace (30) pour former un balai d'essuie-glace de véhicule automobile,
la forme de base (14) de l'élément de support (10) a un rayon de courbure (32) plus faible que la forme de consigne (28) qui peut être augmentée au cours de la seconde étape du procédé (16) pour la mise en forme a un rayon de courbure plus grand (34).

2. Procédé selon la revendication 1,
**caractérisé en ce que**
dans la première étape de mise en forme (90) du procédé, on utilise une matière plastique renforcée par des fibres et la pièce en matière plastique (10) est déformée dans la seconde étape de procédé de mise en forme (16), pour être précontrainte et chauffée et maintenue dans cet état jusqu'à ce que les fibres (24) soient précontraintes de manière permanente dans la direction de traction (20, 22).

3. Procédé selon l'une quelconque des revendications 1 ou 2,
**caractérisé en ce que**
la pièce en matière plastique (10) est chauffée dans une première étape de procédé (90) de mise en forme suivant une application ultérieure et elle est maintenue dans cet état jusque dans au moins une des zones de tension de traction qui se développe (18) dans la pièce en matière plastique (10), une structure de la matière de la pièce en matière plastique (10) est alignée en permanence sur la direction de la tension (20, 22).

4. Procédé selon l'une quelconque des revendications 1 à 3,
**caractérisé en ce que**
l'élément de support (10) est formé dans la seconde étape de procédé (16) de mise en forme en étant comprimé sur une surface (36, 38, 40, 42, 44) et ainsi déformé pour générer une courbe de tension intérieure dans l'élément de support (10).

5. Procédé selon la revendication 4,
**caractérisé en ce que**
dans la seconde étape de mise en forme (16) on mesure les forces d'application (46) de l'élément de support (10) sur la surface (36), en comparant avec des forces d'appui de consigne (48) et en réglant l'amplitude de la tension et/ou l'évolution de la tension dans l'élément de support (10), la température et/ou la durée de la tension pour l'adapter aux efforts de pression de consigne (48).

6. Procédé selon l'une quelconque des revendications 1 à 5,
**caractérisé en ce que**
dans la première étape de procédé (90) de mise en forme, on fabrique un élément de support (10) essentiellement homogène en tension.

7. Procédé selon l'une quelconque des revendications 1 à 6,
**caractérisé en ce que**
dans la première étape de mise en forme (90) on réalise un élément de support (10) avec des variations de section essentiellement régulières.

8. Procédé selon l'une quelconque des revendications 1 à 7,
**caractérisé en ce qu'**
une forme de base (50) de l'élément de support (12) fabriqué dans une première étape de procédé (90) est raccourci d'une longueur de base (56) dans une seconde étape de procédé (92) pour arriver au moins à une longueur de consigne (52, 54).

9. Procédé selon l'une quelconque des revendications 1 à 8,
**caractérisé en ce que**
dans au moins une étape de procédé (92) on raccourcit l'élément de support (12) et dans au moins une seconde étape de procédé (16), on déforme cette pièce en continu et on l'adapte à une forme de consigne, (28).

10. Procédé selon l'une quelconque des revendications 8 ou 9,
**caractérisé en ce que**
l'élément de support (12) est associé à un pare-brise (58) et est **caractérisé en ce que** les éléments de support les plus courts d'un essuie-glace se voient attribuer le même petit rayon de courbure (60) que des éléments de support (12) non raccourcis.

11. Procédé selon l'une quelconque des revendications précédentes,
**caractérisé en ce qu'**
un numéro caractéristique est introduit dans la commande et en fonction de cela, l'élément de support (12) est raccourci à une longueur de consigne (52, 54) définie et/ou dans une troisième étape de procédé de mise en forme (16) on déforme en permanence et on l'adapte à une forme de consigne (28) prédéfinie.

12. Procédé selon la revendication 11,
**caractérisé en ce que**
le numéro caractéristique est choisi au moins en partie identique au numéro d'immatriculation d'un véhicule automobile.

13. Balai d'essuie-glace fabriqué selon un procédé de l'une quelconque des revendications précédentes, comportant un élément de support (12),
**caractérisé en ce que**
l'élément de support (12) présente des zones de rupture de consigne (62, 64).
